(19) Europäisches Patentamt
European Patent Office
Office européen des brevets

(11) EP 0 748 851 B1

# (12) EUROPÄISCHE PATENTSCHRIFT

(45) Veröffentlichungstag und Bekanntmachung des Hinweises auf die Patenterteilung:
**09.05.2001 Patentblatt 2001/19**

(51) Int Cl.[7]: **C09B 67/22**, C08K 5/3415
// C09B57/00

(21) Anmeldenummer: **96810376.2**

(22) Anmeldetag: **07.06.1996**

(54) **Pigmentzusammensetzungen aus Diketopyrrolopyrrolen**

Pigment compositions based on diketopyrrolopyrroles

Compositions pigmentaires contenant des dicétopyrrolopyrrolles

(84) Benannte Vertragsstaaten:
**CH DE FR GB IT LI**

(30) Priorität: **15.06.1995 CH 177195**
**14.03.1996 CH 67796**

(43) Veröffentlichungstag der Anmeldung:
**18.12.1996 Patentblatt 1996/51**

(73) Patentinhaber: **Ciba Specialty Chemicals Holding Inc.**
**4057 Basel (CH)**

(72) Erfinder:
- **Wallquist, Olof, Dr.**
**1723 Marly (CH)**
- **Schlöder, Ingo**
**1753 Matran (CH)**
- **Wooden, Gary, Dr.**
**1716 Oberschrot (CH)**

(56) Entgegenhaltungen:
**EP-A- 0 094 911**
**EP-A- 0 098 808**
**EP-A- 0 181 290**
**EP-A- 0 190 999**
**EP-A- 0 256 983**
**EP-A- 0 643 110**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 748 851 B1

Printed by Jouve, 75001 PARIS (FR)

## Beschreibung

Die vorliegende Anmeldung betrifft in ihrem Kristallwachstum gehemmte Pigmentzusammensetzungen bestehend aus zwei Diketopyrrolopyrrolen, wobei das eine durch Cyangruppen substituiert ist, sowie deren Herstellung und Verwendung.

In Beispiel 47 von US 4,579,949 wird eine Pigmentmischung aus einem Bis-(pyridyl)-diketopyrrolopyrrol und einem Bis-(4-cyanophenyl)-diketopyrrolopyrrol mit einem Molverhältnis von 1:1 beschrieben.

Im US-Patent 4 720 305 wird eine Mischsynthese zur Herstellung von Diketopyrrolopyrrolgemischen beschrieben, die sich u.a. durch hohe Farbstärke und Transparenz auszeichnen. Unter manchen anderen sind auch Beispiele erwähnt, bei welchen eines der Ausgangsnitrile Isophthalonitril ist. Gemäss dieser Mischsynthese entstehen stets zwangsläufig Gemische aus 3 verschiedenen Diketopyrrolopyrrolen, und wenn eines der Nitrile Isophtalonitril ist, 3 Diketopyrrolopyrrole der Formeln

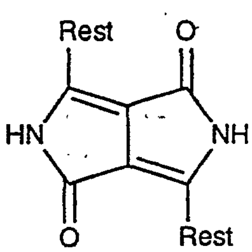 , 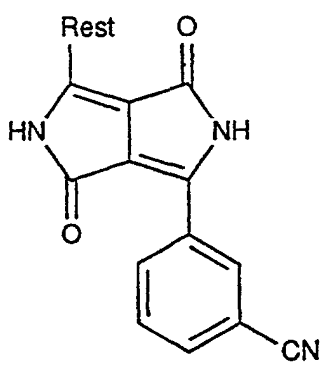 und 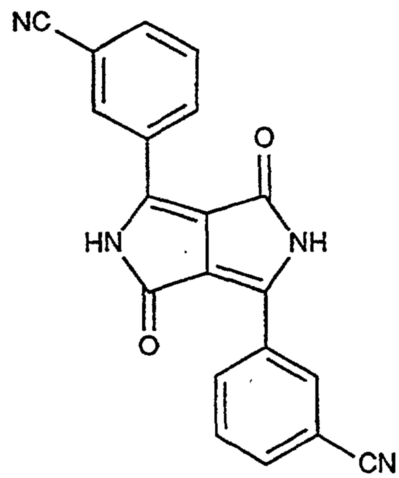

Es ist nun gefunden worden, dass bei der Zugabe einer kleineren Menge eines cyansubstituierten Diketopyrrolopyrrols vor oder während der Synthese eines nicht cyansubstituierten Pyrrolopyrrols, ganz überraschend eine stärkere Kristallwachstumshemmung stattfindet Dadurch lassen sich je nach den Protolysebedingungen sehr farbstarke hochtransparente als auch opake Pigmentformen herstellen, die besonders rekristallisations- und hitzestabil sind und sich zudem sehr gut auch für das verzugsfreie Pigmentieren von Polyolefinen eignen.

Die vorliegende Erfindung betrifft demnach eine Pigmentzusammensetzung bestehend aus

a) 80-99,8 Mol% eines Diketopyrrolopyrrols der Formel I

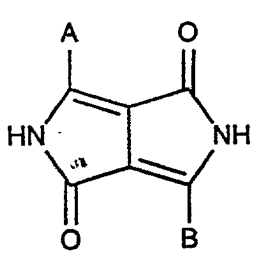 (I),

worin A und B unabhängig voneinander eine Gruppe

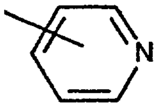 , 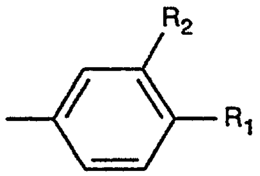 oder 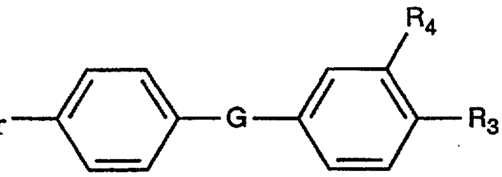

sind, worin $R_1$ und $R_2$ unabhängig voneinander Wasserstoff, Chlor, Brom, $C_1$-$C_6$-Alkyl, $C_1$-$C_{18}$-Alkoxy, $C_2$-$C_{19}$-Alkoxycarbonyl, $C_2$-$C_{19}$-Alkylcarbamoyl, $C_1$-$C_{18}$-Alkylmercapto, $C_1$-$C_{18}$-Alkylamino, $C_5$-$C_6$-Cycloalkyl, G eine direkte Bindung oder -O-, -S-, -SO-, $-SO_2-$ oder $-NR_5-$, $R_3$ und $R_4$ unabhängig voneinander Wasserstoff, Chlor, Brom, $C_1$-$C_6$-Alkyl, $C_1$-$C_{18}$-Alkoxy oder $C_1$-$C_{18}$-Alkylamino und $R_5$ Wasserstoff oder $C_1$-$C_6$-Alkyl bedeuten, und

b) 20-0,2 Mol% eines Diketopyrrolopyrrols der Formel

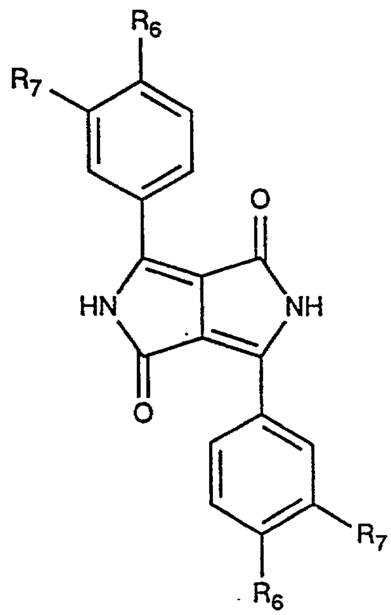 (II),

worin einer der Reste $R_6$ oder $R_7$ Wasserstoff und der andere -CN bedeuten.

Bei $C_1$-$C_6$-Alkyl handelt es sich z.B. Methyl, Ethyl, n-Propyl, Isopropyl, n-Butyl, sec-Butyl, tert.-Butyl, Amyl, Hexyl und bei $C_1$-$C_{18}$-Alkyl zusätzlich z.B um Heptyl, Octyl, 2-Ethylhexyl, Nonyl, Decyl, Dodecyl, Tetradecyl, Hexadecyl oder Octadecyl. Dieselbe Bedeutung kann auch Alkyl in $C_2$-$C_{19}$-Alkylcarbamoyl, $C_1$-$C_{18}$-Alkylmercapto und $C_1$-$C_{18}$-Alkylamino haben.

Bedeuten etwaige Substituenten $C_1$-$C_{18}$-Alkoxy, so handelt es sich z.B. um Methoxy, Ethoxy, n-Propoxy, Isopropoxy, n-Butoxy, tert.-Butoxy, Amyloxy, Hexyloxy, Decyloxy, Dodecyloxy, Hexadecyloxy oder Octadecyloxy. Dieselbe Bedeutung kann auch Alkoxy in $C_2$-$C_{19}$-Alkoxycarbonyl haben.

$C_5$-$C_6$-Cycloalkyl steht z.B. für Cyclopentyl und insbesondere für Cyclohexyl.

Von besonderem Interesse sind Figmentzusammensetzungen bestehend aus 90-99,7 Mol% Diketopyrrolopyrrol der Formel I und 10-0,3 Mol% Diketopyrrolopyrrol der Formel II.

Bevorzugt sind erfindungsgemässe Pigmentzusammensetzungen enthaltend ein Diketopyrrolopyrrol der Formel I, worin A und B unabhängig voneinander eine Gruppe

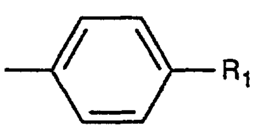 oder 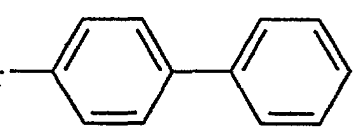

sind, worin $R_1$ Wasserstoff, Chlor, Brom, Methyl, tert.-Butyl, tert.-Amyloxycarbonyl oder tert.-Butyloxycarbonyl ist und

insbesondere solche, worin A und B gleich sind, und ein Diketopyrrolopyrrol der Formel II, worin $R_6$ Wasserstoff und $R_7$ -CN bedeuten.

Die erfindungsgemässen Pigmentzusammensetzungen erhält man, wie bereits erwähnt, durch Zugabe der erforderlichen Menge eines cyansubstituierten Diketopyrrolopyrrols vor oder während der Synthese des Diketopyrrolopyrrols der Formel I. Dieses Verfahren ist neu und bildet demnach einen weiteren Gegenstand der vorliegenden Erfindung, d.h. ein Verfahren zur Herstellung der oben definierten erfindungsgemässen Pigmentzusammensetzungen bestehend aus

a) 80-99,8 Mol% eines Diketopyrrolopyrrols der Formel I
und
b) 20-0,2 Mol% eines Diketopyrrolopyrrols der Formel II

durch Umsetzung von 1 Mol eines Bernsteinsäuredialkylesters oder -diphenylesters, wobei im Bernsteinsäureesterrest Alkyl $C_1$-$C_{18}$-Alkyl und Phenyl unsubstituiertes oder durch ein oder zwei Halogenatome, eine oder zwei $C_1$-$C_6$-Alkyl- oder $C_1$-$C_6$-Alkoxygruppen substituiertes Phenyl bedeuten, mit je einem Mol eines Nitrils der Formeln A-CN und B-CN, wobei A und B die oben angegebene Bedeutung haben, in einem inerten organischen Lösungsmittel in Gegenwart eines Alkalimetalls oder eines Alkali-alkoholates als starke Base bei erhöhter Temperatur zu einem Pigmentalkalimetallsalz und anschliessende Freisetzung des Diketopyrrolopyrrols der Formel I durch Protolyse des entsprechenden Pigmentalkalimetallsalzes und nachfolgende Konditionierung nach allgemein bekannten Methoden,
dadurch gekennzeichnet, dass vor oder während dieser Synthese 0,2-20 Mol% eines Diketopyrrolopyrrols der Formel

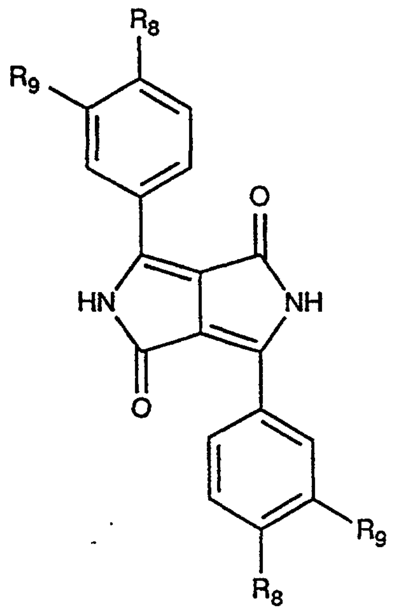

(III),

worin einer der Reste $R_8$ oder $R_9$ Wasserstoff und der andere -CN bedeuten, zugegeben werden.

Bevorzugt sind $R_6$ bzw. $R_8$ Wasserstoff und $R_7$ bzw. $R_9$ -CN.

$C_1$-$C_{18}$-Alkyl im Bernsteinsäureesterrest bedeutet z.B. Methyl, Ethyl, n-Propyl, Isopropyl, n-Butyl, tert.-Butyl, Amyl, Hexyl, Octyl, 2,2-Dimethylhexyl, Decyl, Dodecyl, Hexadecyl oder OctadecyL

Für $C_1$-$C_6$-Alkyl und $C_1$-$C_6$-Alkoxy als Phenylsubstituenten im Bernsteinsäureesterrest gilt die gleiche Ausdeutung wie oben bereits für $R_1$ und $R_2$ angegeben.

Die Zugabe des Diketopyrrolopyrrols der Formel III erfolgt zweckmässig vor der Protolyse des Pigmentalkalisalzes oder bevorzugt am Anfang der Synthese, bevor Bernsteinsäureester und Nitrile zum vorgelegten Lösungsmittel und der Base gegeben werden. Bevorzugt werden 0,3-10 Mol% des Diketopyrrolopyrrols der Formel III zugegeben.

Die Mol%-Angaben für die Verbindungen der Formeln I und II bzw. III beziehen sich auf die Verbindungen I und II bzw. III bei einer theoretischen 100 %igen Ausbeute der Zusammensetzung, berechnet ausgehend von der eingesetzten Menge Nitril und der Verbindung der Formel III.

Diketopyrrolopyrrole der Formel III sind bekannte Substanzen und können z.B. nach demselben oben für die Herstellung von Diketopyrrolopyrrolen der Formel I angegebenen und beispielsweise im US-Patent 4 579 949 beschriebenen Verfahren hergestellt werden.

Je nach Protolyse- bzw. Konditioniertemperatur können somit ganz einfach entweder hochtransparente oder

opake Pigmentformen hergestellt werden. Hochtransparente Pigmentformen können bei höheren Temperaturen auch ohne Zugabe von Säuren erhalten werden.

Dank der Zugabe des Kristallwachstumshemmers (III) wird die Reproduzierbarkeit des Herstellungsverfahrens erheblich erleichtert.

Ein weiterer Gegenstand der Erfindung ist ein Verfahren zur Herstellung der erfindungsgemässen Pigmentzusammensetzung durch saure oder bevorzugt alkalische Umfällung eines Gemisches von Diketopyrrolopyrrol der Formel I und Diketopyrrolopyrrol der Formel III im Molverhältnis 80-99,8:20-0,2 gemäss allgemein bekannten Methoden (vgl. z.B. US-Patent 4 783 540).

Wie bereits erwähnt eignen sich die erfindungsgemässen Pigmentzusammensetzungen sehr gut auch zum verzugsfreien Pigmentieren von Polyolefinen. Gegenstand der Erfindung ist demnach zusätzlich auch ein Verfahren zum verzugsfreien Pigmentieren von Polyolefinen durch Verwendung einer erfindungsgemässen Pigmentzusammensetzung.

Die erfindungsgemässen Pigmentzusammensetzungen können zum Färben von hochmolekularem organischem Material verwendet werden.

Hochmolekulare organische Materialien, die mit den erfindungsgemässen Pigmentzusammensetzungen gefärbt bzw. pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Pigmentzusammensetzungen als Toner oder in Form von Präparaten einzusetzen.

Bezogen auf das zu pigmentierende hochmolekulare organische Material kann man die erfindungsgemässen Pigmentzusammensetzungen in einer Menge von 0,01 bis 30 Gew.%, vorzugsweise von 0,1 bis 10 Gew. %, einsetzen.

Je nach Konditionierverfahren oder Applikationszweck kann es von Vorteil sein, dem Pigment gewisse Mengen an texturverbessernden Mitteln vor oder nach dem Konditionierprozess zuzufügen, sofern diese keine negative Wirkung bei der Verwendung der erfindungsgemässen Pigmentzusammensetzungen (insbesondere in Polyethylen) haben. Als solche kommen insbesondere Fettsäuren mit mindestens 18 C-Atomen, beispielsweise Stearin- oder Behensäure oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearinalkohol oder aliphatische 1,2-Dihydroxyverbindungen mit 8 bis 22 C-Atomen, wie 1,2-Dodecandiol, ferner modifizierte Kolophoniummaleinatharze oder Fumarsäurekolophoniumharze in Betracht. Die texturverbessernden Mittel werden vorzugsweise in Mengen von 1,0-50 Gew.%, insbesondere 5-40 Gew.%, bezogen auf das Endprodukt, zugesetzt. Die obenerwähnten 1,2-Dihydroxyverbindungen, insbesondere 1,2-Dodecandiol, dienen auch zur Verbesserung der Filtration der suspendierten Pigmentzusammensetzung.

Die Pigmentierung der hochmolekularen organischen Substanzen mit den erfindungsgemässen Pigmentzusammensetzungen erfolgt beispielsweise derart, dass man sie gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Pigmentzusammensetzungen in die Polymeren eingearbeitet werden. Zwecks Erzielung verschiedener Farbtöne ist es ferner möglich, den hochmolekularen organischen Stoffen neben den erfindungsgemässen Pigmentzusammensetzungen noch Füllstoffe bzw. andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die erfindungsgemässen Pigmentzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Besonders geeignet sind die erfindungsgemässen Pigmentzusammensetzungen zum Einfärben von Kunststoffen, insbesondere Polyvinylchlorid und Polyolefinen, und Lacken, insbesondere Automobil- und Industrielacken.

In Färbungen, beispielsweise von Lacken oder Polyolefinen, zeichnen sich die erfindungsgemässen Pigmentzusammensetzungen durch gute allgemeine Pigmenteigenschaften, wie gute Dispergierbarkeit, hohe Farbstärke

und Reinheit, gute Migrations-, Licht- und Wetterbeständigkeit, gute Glänz- und Rheologieeigenschaften sowie, bei feinen Teilchen, durch ausserordentliche Transparenz aus.

Bei der Verarbeitung in Kunststoffen, insbesondere in Polyolefinen und in Industrielacken, die bei höheren Temperaturen verarbeitet werden, zeichnen sich die erfindungsgemässen Pigmentzusammensetzungen durch hohe Hitze- und Verarbeitungsstabilität aus. Durch die verbesserte Reproduzierbarkeit des Herstellungsverfahrens wird auch die koloristische Reproduzierbarkeit der erfindungsgemässen Pigmentzusammensetzungen erleichtert.

Die nachfolgenden Beispiele erläutern die Erfindung.

Beispiel 1:

In einem Sulfierkolben werden unter Stickstoff 170 ml tert.-Amylalkohol vorgelegt. Nach der Zugabe von 11,04 g Natrium wird das Gemisch auf 92-102°C aufgewärmt. Das geschmolzene Natrium wird unter heftigem Rühren über Nacht bei 100-107°C gehalten. Zur entstandenen Lösung werden dann bei 100°C 2,3 g (0,0068 Mol, d.h. 4,0 Mol% bezogen auf das Endprodukt (Pigmentzusammensetzung) bei 100 %iger Ausbeute) der Verbindung der Formel

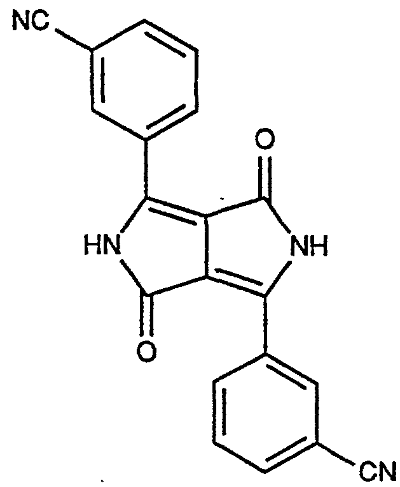

(IV)

zugegeben. Dann werden 44,02 g (0,32 Mol) 4-Chlorbenzonitril und 37,2 g Bernsteinsäure-diisopropylester gelöst in 50 ml tert.-Amylalkohol innerhalb von 2 Stunden bei 80-98°C zugegeben. Das Reaktionsgemisch wird bei 80°C 3 Stunden weiter gerührt und gleichzeitig werden zusätzlich 4,88 g Bemsteinsäure-diisopropylester zugegeben.

Anschliessend wird das Reaktionsgemisch auf Raumtemperatur abgekühlt und in eine Mischung von 270 ml Methanol, 200 ml Wasser und 48,1 g konz. Schwefelsäure bei 20°C geschüttet und dann bei 20°C 6 Std. gerührt. Das rote Gemisch wird filtriert, mit Methanol und Wasser gewaschen und das Pigment bei 80°C im Vakuumtrockenschrank getrocknet.

Man erhält 46,5 g eines roten Pulvers.

| Analyse: | C | H | N | Cl |
|---|---|---|---|---|
| Berechnet | 61,03 % | 2,83 % | 8,26 % | 18,90 % |
| Gefunden | 60,67 % | 3,05 % | 8,33 % | 18,54 % |

Beispiel 2: 12,0 g Natrium werden zu 130 ml trockenem tert.-Amylalkohol gegeben, auf 100°C geheizt und gerührt bis das Natrium abreagiert hat. Die Lösung wird auf 100°C gekühlt, dann werden zuerst 0,44 g (1,31 mMol, 1 Mol%) des Diketopyrrolopyrrols der Formel IV, dann 31,3 g (261,6 mMol) p-Tolunitril und anschliessend langsam (5 Stunden) unter Rühren bei 105°-110°C 34,5 g Bernsteinsäurediisopropylester zugegeben. Nach der Zugabe wird 2 Stunden nachgerührt, mit 50 ml tert.-Amylalkohol verdünnt auf Raumtemperatur abgekühlt, und zu einem Gemisch aus 141 ml Wasser und 141 ml Methanol bei einer Anfangstemperatur von 14°C zugegeben. Die Rückstände werden mit 20 ml tert.-Amylalkohol gespült und das Gemisch wird 4 Stunden bei 68°C gerührt, auf Raumtemperatur abgekühlt und filtriert. Der Rückstand wird mit Methanol und Wasser gewaschen bis das Filtrat farblos ist, und dann in einem Vakuumtrockenschrank bei 80°C getrocknet. Man erhällt 30,9 g eines Produktes, das in PVC eine rote, opake Färbung ergibt.

| Analyse: | C | H | N |
|---|---|---|---|
| Ber.: | 75,9 | 5,1 | 8,9% |
| Gef.: | 75,1 | 5,2 | 8,9% |

Beispiel 3: 13,8g Natrium werden zu 150 ml trockenem tert-Amylalkohol gegeben, auf 100°C geheizt und gerührt bis das Natrium abreagiert hat. Die Lösung wird auf 100°C gekühlt, dann werden zuerst 1,57 g (4,6 mMol, 3 Mol%) des Diketopyrrolopyrrols der Formel IV, dann 47,8 g (300 mMol) 4-tert.-Butylbenzonitril und anschliessend langsam (3 Stunden) unter Rühren bei 105°-110°C 39,7 g Bernsteinsäurediisopropylester zugegeben. Nach der Zugabe wird 2 Stunden bei 103°C nachgerührt, mit 60 ml tert.-Amylalkohol verdünnt auf Raumtemperatur abgekühlt, und zu einem Gemisch aus 250 ml Wasser und 250 ml Methanol bei einer Anfangstemperatur von 20°C zugegeben. Die Rückstände werden mit 20 ml tert.-Amylalkohol gespült und das Gemisch wird 4 Stunden bei 90°C (Ueberdruck = 1 bar) gerührt, auf Raumtemperatur abgekühlt und filtriert. Der Rückstand wird mit Methanol und Wasser gewaschen bis das Filtrat farblos ist, und dann in einem Vakuumtrockenschrank bei 80°C getrocknet. Man erhällt 40,0 g eines Produktes, das in PVC eine orange Färbung ergibt.

| Analyse: | C | H | N |
|---|---|---|---|
| Ber.: | 78,0 | 7,0 | 7,0% |
| Gef.: | 77,7 | 7,2 | 7,0% |

Beispiel 4: 13,8g Natrium werden zu 150 ml trockenem tert.-Amylalkohol gegeben, auf 100°C geheizt und gerührt bis das Natrium abreagiert hat. Die Lösung wird auf 100°C gekühlt, dann werden zuerst 2,4 g (7,1 mmol, 4,5 Mol%) des Diketopyrrolopyrrols der Formel IV, dann 47,8 g (300 mMol) 4-tert.-Butyl-benzonitril und anschliessend langsam (5 Stunden) unter Rühren bei 105°-110°C 39,4 g Bernsteinsäurediisopropylester zugegeben. Nach der Zugabe wird 2 Stunden bei 103°C nachgerührt, mit 80 ml tert.-Amylalkohol verdünnt, auf Raumtemperatur abgekühlt, und zu einem Gemisch aus 160 ml Wasser und 160 ml Methanol bei einer Anfangstemperatur von 15°C zugegeben. Nach Beendigung der Zugabe wird das Gemisch mit 150 ml Wasser/Methanol 1:1 (Volumen) verdünnt und das Gemisch wird 3 Stunden bei 30°C gerührt, auf Raumtemperatur abgekühlt und filtriert. Der Rückstand wird mit Methanol und Wasser gewaschen bis das Filtrat farblos ist, und dann in einem Vakuumtrockenschrank bei 80°C getrocknet. Man erhält 40,0 g eines dunkelroten Produktes, das in PVC eine orange, transparente Färbung ergibt.

| Analyse: | C | H | N |
|---|---|---|---|
| Ber.: | 78,0 | 7,0 | 7,0% |
| Gef.: | 76,8 | 7,1 | 7,3% |

Beispiel 5: 13,8 g Natrium werden zu 146 ml trockenem tert.-Amylalkohol gegeben, auf 100°C geheizt und gerührt bis das Natrium abreagiert hat. Die Lösung wird auf 100°C gekühlt, dann werden zuerst 2,3 g (6,7 mMol, 4,3 Mol%) des Diketopyrrolopyrrols der Formel IV und anschliessend ein Gemisch von 31,2 g (99%ig, 300 mMol) Benzonitril und 39,5 g Bernsteinsäurediisopropylester während 6 Stunden zugegeben. Nach der Zugabe wird 2 Stunden bei 95°C nachgerührt, mit 90 ml tert.-Amylalkohol verdünnt, auf Raumtemperatur abgekühlt, zu einem Gemisch aus 140 ml Wasser und 200 ml Methanol bei einer Anfangstemperatur von 22°C zugegeben. Die Rückstände werden mit 2x10 ml tert.-Amylalkohol gespült. Nach Beendigung der Zugabe wird das Gemisch 1 Std. bei 35°C gerührt und filtriert. Der Rückstand wird mit Methanol und Wasser gewaschen bis das Filtrat farblos ist, und dann in einem Vakuumtrockenschrank bei 80°C getrocknet. Man erhält 34,1 g eines roten Produktes, das in PVC eine rote, transparente Färbung ergibt.

| Analyse: | C | H | N |
|---|---|---|---|
| Ber.: | 75,0 | 4,2 | 9,7% |
| Gef.: | 73,8 | 4,2 | 10,1% |

Beispiel 6: In einem Sulfierkolben werden unter Stickstoff 210 ml tert.-Amylalkohol vorgelegt. Nach der Zugabe von 10,60 g Natrium wird das Gemisch auf 92-102°C aufgewärmt. Das geschmolzene Natrium wird unter heftigem Rühren über Nacht bei 100-107°C gehalten. Zur entstandenen Lösung werden dann 42,06 g 4-Biphenylnitril und 2,20 g des Diketopyrrolopyrrols der Formel IV bei 95°C zugegeben. Man heizt wieder auf 105-110°C und dosiert innerhalb

von 6 Std. 27,9 g Bernsteinsäure-diisopropylester zu. Das Reaktionsgemisch wird bei 100°C 3 Stunden weiter gerührt. Anschliessend wird das Reaktionsgemisch auf Raumtemperatur abgekühlt und in 600 ml Wasser geschüttet. Die rote Suspension wird dann auf 85-90°C erhitzt und 1 Stunde gerührt. Anschliessend wird zur Elimination des tert.-Amylalkohols während 1 Stunde Wasserdampf eingeleitet. Bei 50°C wird das rote Gemisch filtriert, mit Wasser und dann mit Methanol und Wasser gewaschen und das Pigment bei 80°C im Vakuumtrockenschrank getrocknet. Man erhält 43,0 g eines roten Pulvers.

| Analyse: | C | H | N |
|---|---|---|---|
| Ber.: | 81,8 % | 4,6 % | 6,4 % |
| Gef.: | 80,8 % | 4,6 % | 6,5 % |

Beispiel 7: In einem Sulfierkolben werden unter Stickstoff 330 ml tert.-Amylalkohol vorgelegt. Nach der Zugabe von 7.20 g Natrium wird das Gemisch auf 92-102°C aufgewärmt. Das geschmolzene Natrium wird unter heftigem Rühren über Nacht bei 100-107°C gehalten. Zur entstandenen Lösung werden dann 45.0 g des Diketopyrrolopyrrols der Formel

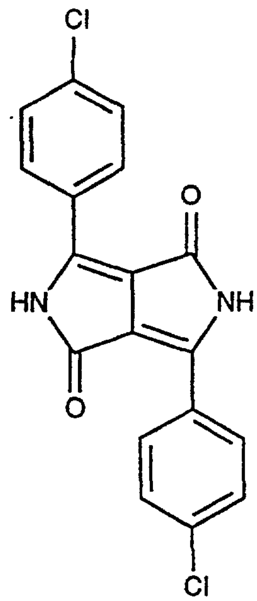

und 2.25 g des Diketopyrrolopyrrols der Formel IV bei 80°C zugegeben. Man heizt wieder auf 100-105°C und lässt 16 Stunden weiter rühren. Anschliessend wird das Reaktionsgemisch auf Raumtemperatur abgekühlt und auf eine Mischung von 240 g Eis, 480 ml Wasser und 32.3 g konz. Schwefelsäure bei 0°C gedrückt und dann bei 0°C 6 Stunden gerührt. Das rote Gemisch wird filtriert, mit Methanol und Wasser gewaschen und das Pigment bei 80°C im Vakuumtrockenschrank getrocknet. Man erhält 45.7 g eines roten Pulvers.

Beispiel 8:

7,5 g des Pigments aus Beispiel 1,98,9 g CAB-Lösung bestehend aus

| | |
|---|---|
| 41,0 g | Celluloseacetobutyrat ®CAB 531.1, 20 %ig in Butanol/Xylol 2:1 (Eastman Chem.) |
| 1,5 g | Zirkonium Octoat, |
| 18,5 g | ®SOLVESSO 150* (ESSO), |
| 21,5 g | Butylacetat und |
| 17,5 g | Xylol, |

* Aromatische Kohlenwasserstoffe

36,5 g Polyesterharz ® DYNAPOL H700 (Dynamit Nobel), 4,6 g Melaminharz MAPRENAL MF650 (Hoechst) und 2,5

g Dispergiermittel ® DISPERBYK 160 (Byk Chemie) werden zusammen während 90 Minuten mit einer Schüttelmaschine dispergiert (Total Lack 150 g; 5 % Pigment). 27,69 g des so erhaltenen Volltonlacks werden für die Base-coat-Lackierung mit 17,31 g Al-Stammlösung (8 %ig) bestehend aus

| | |
|---|---|
| 12,65 g | ®SILBERLINE SS 3334AR, 60%ig (Silberline Ltd.) |
| 56,33 g | CAB Lösung (Zusammensetzung wie oben) |
| 20,81 g | Polyesterharz ®DYNAPOL H700 |
| 2,60 g | Melaminharz ®MAPRENAL MF650 |
| 7,59 g | ®SOLVESSO 150 |

gemischt und auf ein Aluminiumblech spritzappliziert (Nassfilm ca. 20 µm). Nach einer Abdunstzeit von 30 Minuten bei Raumtemperatur wird ein TSA-Lack bestehend aus

| | |
|---|---|
| 29,60 g | Acrylharz ®URACRON 2263 XB, 50 %ig in Xylol/Butanol (Chem. Fabrik Schweizerhalle), |
| 5,80 g | Melaminharz ®CYMEL 327, 90 %ig in Isobutanol, |
| 2,75 g | Butylglycolacetat, |
| 5,70 g | Xylol, |
| 1,65 g | n-Butanol |
| 0,50 g | Siliconöl, 1 %ig in Xylol, |
| 3,00 g | Lichtschutzmittel ®TINUVIN 900, 10 %ig in Xylol (Ciba) |
| 1,00 g | Lichtschutzmittel ®TINUVIN 292, 10 %ig in Xylol (Ciba) |

als Top-coat-Lackierung spritzappliziert (Nassfilm ca. 50 µm). Anschliessend wird der Lack nach weiteren 30 Minuten Abdunsten bei Raumtemperatur, 30 Minuten bei 130°C eingebrannt. Man erhält eine rote transparente Lackierung mit sehr guten Beständigkeiten.

Beispiel 9: 0,6 g des Pigments von Beispiel 1 werden mit 67 g Polyvinylchlorid, 33 g Dioctylphthalat, 2 g Dibutylzinndilaurat und 2 g Titandioxid vermischt und auf einem Walzenstuhl während 15 Mintuen bei 160°C zu einer dünnen Folie verarbeitet. Die so erzeugte rote transparente PVC-Folie ist sehr farbstark, migrations- und lichtbeständig.

Beispiel 10: 1000 g Polypropylengranulat (® DAPLEN PT-55, Chemie LINZ) und 20 g eines 50 %-igen Pigmentpräparates, bestehend aus 10 g des Pigments von Beispiel 1 und 10 g Mg-Behenat, werden in einer Mischtrommel intensiv vermischt. Das so behandelte Granulat wird bei 260 bis 285°C nach dem Schmelzspinnverfahren versponnen. Man erhält rote stark gefärbte Fasern mit sehr guten Licht- und textilen Echtheiten.

Beispiel 11:

Eine Mischung von 1,0 g des nach Beispiel 2 erhaltenen Pigmentes, 1,0 g Antioxidans (IRGANOX® 1010, CIBA-GEIGY AG) und 1000 g Polyethylen-HD Granulat (® VESTOLEN 60-16, HUELS) wird während 15 Minuten in einer Glasflasche auf einer Rollbank vorgemischt. Danach wird die Mischung in zwei Passagen auf einem Einwellenextruder extrudiert, das so erhaltene Granulat wird auf der Spritzgussmaschine (Allround Aarburg 200) bei 220°C zu Platten verspritzt und 5 Minuten bei 180°C nachgepresst. Die Pressplatten weisen farbstarke rote Nuancen mit guten Beständigkeiten auf.

Beispiel 12: 2 g des gemäss Beispiel 1 erhaltenen Pigments werden mit 1000 g Polyethylen (® STAMILAN 9089 U, DMS Niederlande) in einem Taumelmischer während 10 Minuten trocken vermischt. Die Mischung wird anschliessend ein einem Einschneckenextruder einmal bei 200°C extrudiert. Das so erhaltene Granulat wird auf einer Spritzgussmaschine bei 240°C zu Platten der Dimensionen 174x49x2,5 mm verarbeitet. Die Platten werden während 30 Minuten im Wasserbad bei 90°C getempert und anschliessend an der Luft getrocknet. Frühestens nach 15 Stunden werden die Dimensionen einer solchen Platte und einer unter identischen Bedingungen, aber ohne Pigment hergestellten Platte (Länge, Breite) ausgemessen und der Verzug △L (Länge) und △B (Breite) in ‰ nach folgenden Gleichungen ermittelt:

$$\Delta L = \frac{\text{L farbloser Prüfling - L pigmentierter Prüfling}}{\text{L farbloser Prüfling}} \times 1000$$

$$\Delta B = \frac{\text{B farbloser Prüfling - B pigmentierter Prüfling}}{\text{B farbloser Prüfling}} \times 1000$$

Als in der Praxis verzugsfrei haben sich Pigmente erwiesen, bei denen die absoluten Werte von von △L und △B kleiner als 6 sind; besonders bevorzugt sind Werte kleiner als 3.

## Patentansprüche

1. Pigmentzusammensetzung bestehend aus

a) 80-99,8 Mol% eines Diketopyrrolopyrrols der Formel

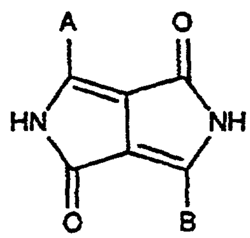

(I),

worin A und B unabhängig voneinander eine Gruppe

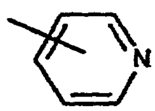

,

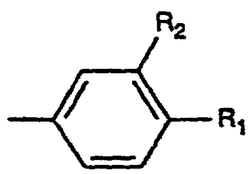

oder

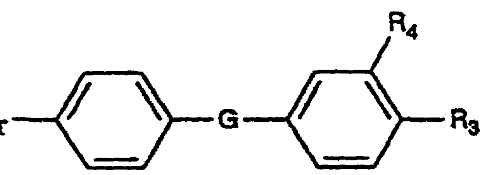

sind, worin $R_1$ und $R_2$ unabhängig voneinander Wasserstoff, Chlor, Brom, $C_1$-$C_6$-Alkyl, $C_1$-$C_{18}$-Alkoxy, $C_2$-$C_{19}$-Alkoxycarbonyl, $C_2$-$C_{19}$-Alkylcarbamoyl, $C_1$-$C_{18}$-Alkylmercapto, $C_1$-$C_{18}$-Alkylamino, $C_5$-$C_6$-Cycloalkyl, G eine direkte Bindung oder -O-, -S-, -SO-, $-SO_2-$ oder $-NR_5-$, $R_3$ und $R_4$ unabhängig voneinander Wasserstoff, Chlor, Brom, $C_1$-$C_6$-Alkyl, $C_1$-$C_{18}$-Alkoxy oder $C_1$-$C_{18}$-Alkylamino und $R_5$ Wasserstoff oder $C_1$-$C_6$-Alkyl bedeuten, und

b) 20-0,2 Mol% eines Diketopyrrolopyrrols der Formel

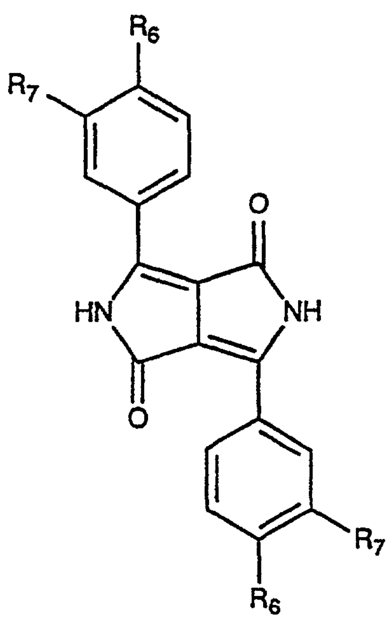

(II),

worin einer der Reste $R_6$ oder $R_7$ Wasserstoff und der andere -CN bedeuten.

**2.** Pigmentzusammensetzung gemäss Anspruch 1 bestehend aus 90-99,7 Mol% Diketopyrrolopyrrol der Formel I und 10-0,3 Mol% Diketopyrrolopyrrol der Formel II.

**3.** Pigmentzusammensetzung gemäss Anspruch 1 enthaltend ein Diketopyrrolopyrrol der Formel I, worin A und B unabhängig voneinander eine Gruppe

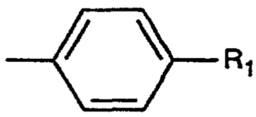 oder 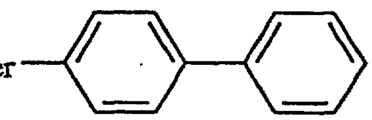

sind, worin $R_1$ Wasserstoff, Chlor, Brom, Methyl, tert.-Butyl, tert.-Amyloxycarbonyl oder tert.-Butyloxycarbonyl ist, und ein Diketopyrrolopyrrol der Formel II, worin $R_6$ Wasserstoff und $R_7$ -CN bedeuten.

**4.** Pigmentzusammensetzung gemäss Anspruch 3 enthaltend ein Diketopyrrolopyrrol der Formel I, worin A und B gleich sind.

**5.** Verfahren zur Herstellung einer Pigmentzusammensetzung gemäss Anspruch 1 durch Umsetzung von 1 Mol eines Bernsteinsäuredialkylesters oder -diphenylesters, wobei im Bernsteinsäureesterrest Alkyl $C_1$-$C_{18}$-Alkyl und Phenyl unsubstituiertes oder durch ein oder zwei Halogenatome, eine oder zwei $C_1$-$C_6$-Alkyl- oder $C_1$-$C_6$-Alkoxygruppen substituiertes Phenyl bedeuten, mit je einem Mol eines Nitrils der Formeln A-CN und B-CN, wobei A und B die in Anspruch 1 angegebene Bedeutung haben, in einem inerten organischen Lösungsmittel in Gegenwart eines Alkalimetalls oder eines Alkali-alkoholates als starke Base bei erhöhter Temperatur zu einem Pigmentalkalimetallsalz und anschliessende Freisetzung des Diketopyrrolopyrrols der Formel I durch Protolyse des entsprechenden Pigmentalkalimetallsalzes und nachfolgende Konditionierung nach allgemein bekannten Methoden,
dadurch gekennzeichnet, dass vor oder während dieser Synthese 0,2-20 Mol% eines Diketopyrrolopyrrols der Formel

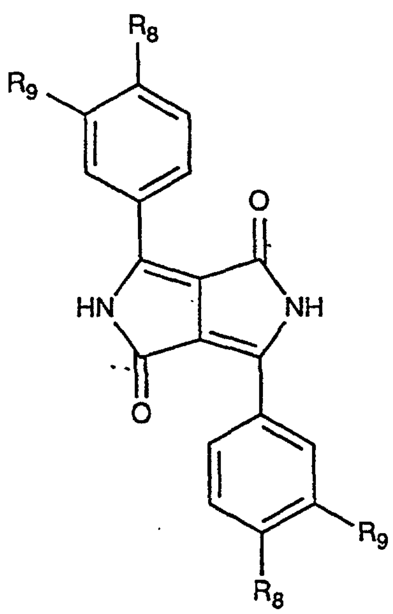

(III),

worin einer der Reste $R_8$ oder $R_9$ Wasserstoff und der andere -CN bedeuten, zugegeben werden.

**6.** Verfahren gemäss Anspruch 5, dadurch gekennzeichnet, dass die Zugabe des Diketopyrrolopyrrols der Formel III vor der Protolyse des Pigmentalkalisalzes erfolgt.

**7.** Verfahren gemäss Anspruch 5, dadurch gekennzeichnet, dass die Zugabe des Diketopyrrolopyrrols der Formel

III am Anfang der Synthese, bevor Bernsteinsäureester und Nitrile zum vorgelegten Lösungsmittel und der Base gegeben werden, erfolgt.

**8.** Verfahren gemäss Anspruch 5, dadurch gekennzeichnet, dass 0,5-10 Mol% des Diketopyrrolopyrrols der Formel III zugegeben werden.

**9.** Verfahren gemäss Anspruch 5, dadurch gekennzeichnet, dass in den Formeln II und III $R_6$ und $R_8$ Wasserstoff, und $R_7$ und $R_9$ -CN bedeuten.

**10.** Verfahren zur Herstellung der Pigmentzusammensetzung gemäss Anspruch 1 durch saure oder bevorzugt alkalische Umfällung eines Gemisches von Diketopyrrolopyrrol der Formel I und Diketopyrrolopyrrol der Formel III im Molverhältnis 80-99,8:20-0,2 gemäss allgemein bekannten Methoden

**11.** Verfahren zum verzugsfreien Pigmentieren von Polyolefinen durch Verwendung einer Pigmentzusammensetzung gemäss Anspruch 1.

**12.** Mit Pigmentzusammensetzungen gemäss Anspruch 1 pigmentiertes hochmolekulares organisches Material.

## Claims

**1.** A pigment composition consisting of

a) 80-99.8 mol% of a diketopyrrolopyrrole of formula

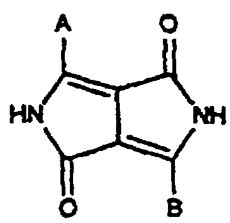

(I),

in which A and B are each independently of the other a

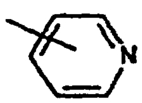 , 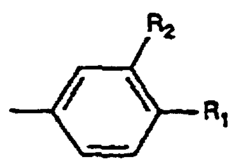 or 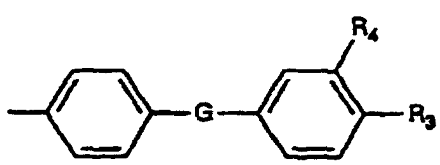

group, in which $R_1$ and $R_2$ are each independently of the other hydrogen, chloro, bromo, $C_1$-$C_6$alkyl, $C_1$-$C_{18}$alkoxy, $C_2$-$C_{19}$alkoxycarbonyl, $C_2$-$C_{19}$alkylcarbamoyl, $C_1$-$C_{18}$alkyl-mercapto, $C_1$-$C_{18}$alkylamino, $C_5$-$C_6$cycloalkyl, G is a direct bond or -O-, -S-, -SO-, -$SO_2$- or $NR_5$-, $R_3$ and $R_4$ are each independently of the other hydrogen, chloro, bromo $C_1$-$C_6$alkyl, $C_1$-$C_{18}$alkoxy or $C_1$-$C_{18}$alkylamino, and $R_5$ is hydrogen or $C_1$-$C_6$alkyl, and

b) 20-0.2 mol% of a diketopyrrolopyrrole of formula

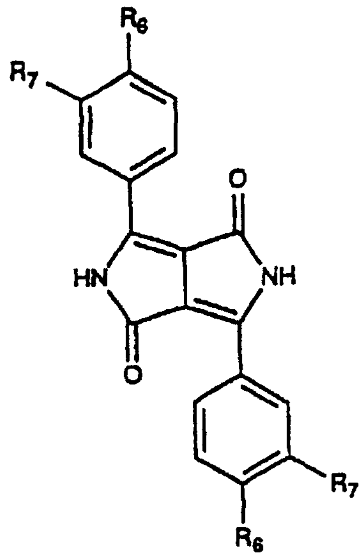

(II),

in which one of the radicals $R_6$ or $R_7$ is hydrogen and the other is -CN.

**2.** A pigment composition according to claim 1, consisting of 90-99.7 mol% of the diketopyrrolopyrrole of formula I and 10-0.3 mol% of the diketopyrrolopyrrole of formula II.

**3.** A pigment composition according to claim 1 comprising a diketopyrrolopyrrole of formula I in which A and B are each independently of the other a

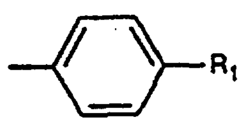
or
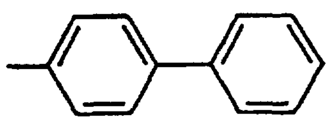

group, in which $R_1$ is hydrogen, chloro, bromo, methyl, tert-butyl, tert-amyloxycarbonyl or tert-butyloxycarbonyl, and a diketopyrrolopyrrole of formula II in which R6 is hydrogen and $R_7$ is -CN.

**4.** A pigment composition according to claim 3, comprising a diketopyrrolopyrrole of formula I in which A and B are identical.

**5.** A process for the preparation of a pigment composition according to claim 1, by reacting 1 mol of a dialkyl succinate or diphenyl succinate, where, in the succinate radical, alkyl is $C_1$-$C_{18}$ alkyl and phenyl is phenyl which is unsubstituted or substituted by one or two halogen atoms, one or two $C_1$-$C_6$ alkyl groups or $C_1$-$C_6$ alkoxy groups, with one mole each of a nitrile of fomulae A-CN and B-CN, in which A and B have the meaning given in claim 1, in an inert organic solvent in the presence of an alkali metal or an alkali metal alcoholate as strong base at elevated temperature to give a pigment alkali metal salt with subsequent release of the diketopyrrolopyrrole of formula I by protolysis of the corresponding pigment alkali metal salt with subsequent conditioning according to commonly known methods,
which process comprises adding before or during this synthesis 0.2-20 mol% of a diketopyrrolopyrrole of formula

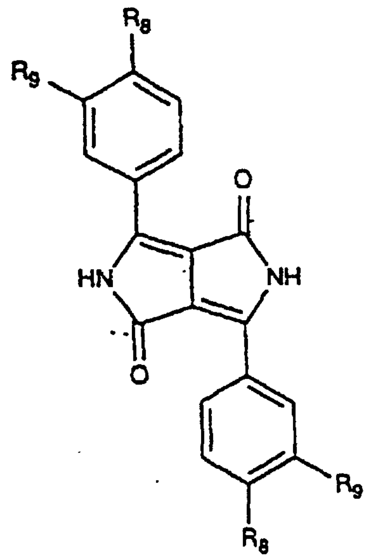

(III),

in which one of the radicals R8 or R9 is hydrogen and the other is -CN.

6. A process according to claim 5, wherein the addition of the diketopyrrolopyrrole of formula III is carried out prior to the protolysis of the pigment alkali metal salt.

7. A process according to claim 5, wherein the addition of the diketopyrrolopyrrole of the formula III is carried out at the beginning of the synthesis, before succinates and nitriles are added to the given solvent and the base.

8. A process according to claim 5, wherein 0.5-10 mol% of the diketopyrrolopyrrole of formula III, are added.

9. A process according to claim 5, wherein in formulae II and III $R_6$ and $R_8$ are hydrogen and $R_7$ and $R_9$ are -CN.

10. A process for the preparation of the pigment composition according to claim 1 by acid or, preferably, alkaline precipitation of a mixture of the diketopyrrolopyrrole of formula I and the diketopyrrolopyrrole of formula III in a molar ratio of 80-99.8:20-0.2 according to commonly known methods.

11. A process for the warp-free pigmenting of polyolefins using a pigment composition according to claim 1.

12. A high molecular weight organic material pigmented with a pigment composition according to claim 1.

**Revendications**

1. Composition pigmentaire constituée par

a) de 80 à 99,8% molaires d'un dicétopyrrolo-pyrrole de formule I

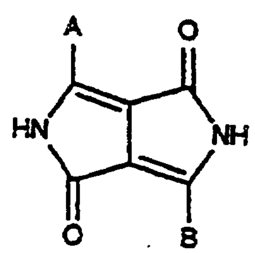

(I),

où A et B représentent, indépendamment l'un de l'autre, un groupe

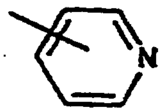 , 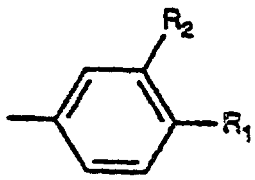 ou 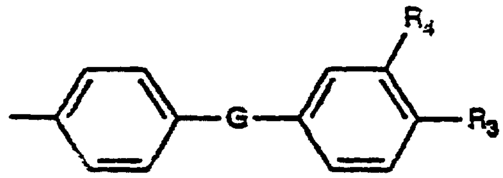

où $R_1$ et $R_2$ représentent, indépendamment l'un de l'autre, un atome d'hydrogène, un atome de chlore, un atome de brome, des groupes alkyle en $C_1$-$C_6$, alkoxy en $C_1$-$C_{18}$, (alkoxy en $C_2$-$C_{19}$)carbonyle, (alkyl en $C_2$-$C_{19}$)-carbamoyle, (alkyl en $C_1$-$C_{18}$)mercapto, (alkyl en $C_1$-$C_{18}$)-amino, cycloalkyle en $C_5$-$C_6$, G représente une liaison directe ou des groupes -O-, -S-, -SO-, $-SO_2-$ ou $-NR_5-$, $R_3$ et $R_4$ représentent, indépendamment l'un de l'autre, un atome d'hydrogène, un atome de chlore, un atome de brome, des groupes alkyle en $C_1$-$C_6$, alkoxy en $C_1$-$C_{18}$ ou (alkyl en $C_1$-$C_{18}$)amino et $R_5$ représente un atome d'hydrogène ou un groupe alkyle en $C_1$-$C_6$, et

b) de 20 à 0,2% molaires d'un dicétopyrrolopyrrole de formule

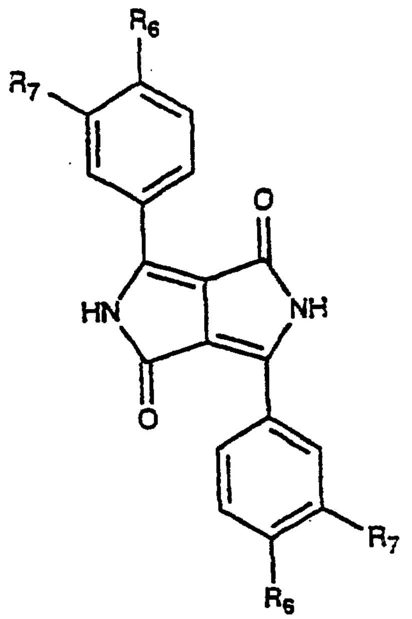

(II),

où l'un des restes $R_6$ ou $R_7$ représente un atome d'hydrogène et l'autre un groupe -CN.

**2.** Composition pigmentaire selon la revendication 1 constituée de 90 à 99,7% molaires de dicétopyrrolopyrrole de formule I et de 10 à 0,3% molaires de dicétopyrrolopyrrole de formule II.

**3.** Composition pigmentaire selon la revendication 1 contenant un dicétopyrrolopyrrole de formule I où A et B représentent, indépendamment l'un de l'autre, un groupe

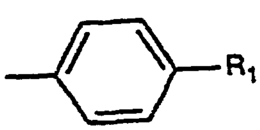 ou 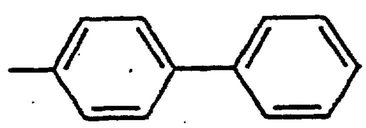

où $R_1$ représente un atome d'hydrogène, un atome de chlore, un atome de brome, des groupes métyle, tert.-butyle, tert.-amyloxycarbonyle ou tert.-butoxycarbonyle, et un dicétopyrrolopyrrole de formule II où R6 représente un atome d'hydrogène et $R_7$ un groupe -CN.

4. Composition pigmentaire selon la revendication 3 contenant un dicétopyrrolopyrrole de formule I où A et B sont identiques.

5. Procédé pour la préparation d'une composition pigmentaire selon la revendication 1 par transformation de 1 mole d'un ester dialkylique ou d'un ester diphénylique de l'acide succinique, dans le reste ester de l'acide succinique le groupe alkyle représente alkyle en $C_1$-$C_{18}$ et le groupe phényle représente phényle non substitué ou substitué par un ou deux atomes d'halogènes, un ou deux groupe alkyle en $C_1$-$C_6$ ou alkoxy en $C_1$-$C_6$, avec 1 mole d'un nitrile de formule A-CN et B-CN, A et B possédant la signification donnée à la revendication 1, dans un solvant organique inerte en présence d'un métal alcalin ou d'un alcoolate de métal alcalin en tant que base forte à température élevée pour obtenir un sel de métal alcalin de pigment et ensuite par libération du dicétopyrrolopyrrole de formule I par protolyse du sels de métal alcalin de pigment et par conditionnement ultérieur selon des méthodes généralement connues,
caractérisé en ce qu'on ajoute avant ou après la synthèse de 0,2 à 20% molaires d'un dicétopyrrolo-pyrrole de formule

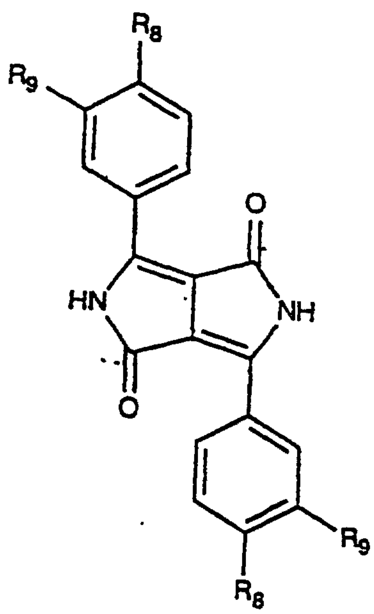

(III),

où l'un des restes $R_8$ ou $R_9$ représente un atome d'hydrogène et l'autre un groupe -CN.

6. Procédé selon la revendication 5,
caractérisé en ce qu'on ajoute le dicétopyrrolopyrrole de formule III avant la protolyse du sel alcalin.

7. Procédé selon la revendication 5
caractérisé en ce qu'on ajoute le dicétopyrrolopyrrole de formule III au début de la synthèse, avant l'ajout de l'ester de l'acide succinique et des nitriles au solvant déjà placé et la base.

8. Procédé selon la revendication 5,
caractérisé en ce qu'on ajoute de 0,5 à 10% molaires du dicétopyrrolopyrrole de formule III.

9. Procédé selon la revendication 5,
caractérisé en ce que dans la formule II et III $R_6$ et $R_8$ représentent des atomes d'hydrogène et $R_6$ et $R_9$ représentent un groupe -CN.

10. Procédé pour la préparation de la composition pigmentaire selon la revendication 1 par reprécipitation acide ou de préférence alcaline d'un mélange de dicétopyrrolopyrrole de formule I et de dicétopyrrolopyrrole de formule III dans un rapport molaire de 80 à 99,8:20 à 0,2 selon des méthodes généralement connues.

11. Procédé pour la pigmentation sans déformation de polyoléfines par utilisation d'une composition pigmentaire selon

la revendication 1.

**12.** Matière organique de haut poids moléculaire pigmenté par les composition pigmentaires selon la revendication 1.